# EUROPÄISCHE PATENTANMELDUNG

(11) **EP 3 410 157 A2**
(43) Veröffentlichungstag der Anmeldung: **05.12.2018**
(21) Anmeldenummer: 18161915.6
(22) Anmeldetag: 15.03.2018
(51) Int. Cl.: G01S 19/34, G01S 19/25, G01S 19/28

(54) **ENERGIESPARENDE POSITIONSBESTIMMUNG FÜR OBJEKTE AUF BAUSTELLEN**

(30) Priorität: 16.03.2017 DE 102017204376
(71) Anmelder: Robert Bosch GmbH, 70442 Stuttgart (DE)
(72) Erfinder: Brenk, Achim, 75236 Kaempfelbach (DE); Koenig, Jens, 71706 Markgroeningen (DE); Schurr, Joachim, 73107 Eschenbach (DE)

(57) **Zusammenfassung**

Verfahren (1) zur Ermittlung der Position (10) mindestens einer Markierungsvorrichtung (1), wobei die Markierungsvorrichtung (1) einen Empfänger (11) für ein satellitengestütztes Navigationssystem (2) aufweist und dazu ausgebildet ist, ihre Position (10) anhand der von einer Mehrzahl Satelliten (21-24) des Navigationssystems (2) ausgesendeten Signale (21a-24a) zu ermitteln (140), wobei die Markierungsvorrichtung (1) über eine bidirektionale Funkverbindung (4) an ein Gateway (5) gekoppelt ist, wobei aus Almanach-Daten (25a), und/oder aus Ephemeriden-Daten (25b), des Navigationssystems (2) mindestens ein Frequenzbereich (21d-24d), in den ein von einem Satelliten (21-24) ausgesendetes Signal (21a-24a) Doppler-verschoben ist, sowie mindestens ein Systemzeitbereich (21c-24c) für die Bestimmung der Laufzeit (21b-24b) des Signals (21a-24a), eingegrenzt (120) und über die bidirektionale Funkverbindung (4) vom Gateway (5) zur Markierungsvorrichtung (1) übermittelt (130) wird.

## Beschreibung

Die vorliegende Erfindung betrifft ein Verfahren zur Ermittlung der Position einer Markierungsvorrichtung, bei dem die Positionsbestimmung durch externe Unterstützung beschleunigt wird, so dass der Energieverbrauch der Markierungsvorrichtung minimiert wird.

### Stand der Technik

Auf Baustellen ist es auf Grund beengter Platzverhältnisse nicht immer möglich, jedem Gegenstand einen festen Lagerplatz zuzuweisen. Bei häufig verwendeten Gegenständen, und insbesondere bei Verbrauchsmaterialien, ist eine kontinuierliche Buchführung, hinsichtlich der Verwendung sowie des Lagerortes, nicht praktikabel. Im Ergebnis wird auf Baustellen sehr viel Arbeitszeit damit verbracht, Gegenstände und Materialien zu suchen.

Die US 2014 240 143 A1 offenbart, die Position des Objekts mit Hilfe von globalen satellitengestützten Navigationssystemen, GNSS, zu bestimmen und die Positionsinformation mittels Sub-1GHz-Funksignalen zu versenden.

Eine entsprechende Markierungsvorrichtung, die mit dem zu lokalisierenden Objekt verbindbar ist, ist batteriebetrieben. Häufig kommt dabei eine nicht auswechselbare Lebensdauerbatterie zum Einsatz. Daher kann die Markierungsvorrichtung nicht ständig aktiv sein, sondern nur intermittierend in bestimmten Zeitabständen. Während der übrigen Zeit befindet sich die Markierungsvorrichtung in einem Ruhezustand.

Dies wiederum bringt es mit sich, dass bei jeder Positionsbestimmung die Signale der Satelliten neu zu akquirieren sind. Dies dauert vergleichsweise lange und erfordert, dass auch der Empfänger für die Signale entsprechend lange betrieben wird. Gerade dieser Empfänger verbraucht jedoch viel Energie.

Die WO 99/19743 A1 offenbart, den GPS-Empfänger eines Mobiltelefons mit einer reduzierten Funktionalität auszustatten und ihm Zusatzinformationen, die das Auffinden eines GPS-Signals im Zeit- und Frequenzraum erleichtern, über eine Basisstation zuzuführen. Dies erfordert eine Synchronisation auf eine gemeinsame Zeitbasis, was beim intermittierenden Betrieb einer Markierungsvorrichtung nicht immer möglich ist.

Die EP 984 295 B1, die EP 2 211198 B1, die EP 2 223 147 B1 sowie die US 6,654,686 B2 offenbaren weitere Verfahren, die erste Positionsbestimmung einer mobilen Einheit ("Time to first fix") zu beschleunigen. Damit wird die Einschaltdauer des GPS-Empfängers verringert. Ein Teil der Energieersparnis muss jedoch für die vergleichsweise aufwendige Datenverarbeitung auf Seiten der mobilen Einheit aufgewendet werden und verringert die Energieeinsparung wieder.

Die US 7,196,661 B2 befasst sich mit dem Problem, speziell den Betrieb nur intermittierend aktiver Markierungsvorrichtungen für Objekte energiesparend zu gestalten. Dazu wird die Markierungsvorrichtung in koordinierten Zeitfenstern, in denen sie aktiv ist, von einer externen Datenquelle schneller mit Almanach- und Ephemeriden-Daten des satellitengestützten Navigationssystems beliefert als dies auf dem direkten Weg über die Satelliten möglich ist.

Weiterer Stand der Technik bezüglich der Aktualisierung von Almanach-Daten auf mobilen Endgeräten ist in der DE 10 2006 043 986 A1 sowie in der US 6,915,210 B2 angegeben.

### Offenbarung der Erfindung

Im Rahmen der Erfindung wurde ein Verfahren zur Ermittlung der Position mindestens einer Markierungsvorrichtung entwickelt. Dabei weist die Markierungsvorrichtung einen Empfänger für ein satellitengestütztes Navigationssystem auf und ist dazu ausgebildet, ihre Position anhand der von einer Mehrzahl von Satelliten des Navigationssystems ausgesendeten Signale zu ermitteln. Die Markierungsvorrichtung ist über eine bidirektionale Funkverbindung an ein Gateway gekoppelt.

Erfindungsgemäß werden aus Almanach-Daten, und/oder aus Ephemeriden-Daten, des Navigationssystems in Verbindung mit dem ungefähren Standort der Markierungsvorrichtung mindestens ein Frequenzbereich ermittelt, in den ein von einem Satelliten ausgesendetes Signal Doppler-verschoben ist, sowie mindestens ein Systemzeitbereich für die Ermittlung der Laufzeit des Signals eingegrenzt und über die bidirektionale Funkverbindung vom Gateway zur Markierungsvorrichtung übermittelt.

Es wurde erkannt, dass auf diese Weise der gesamte Energieverbrauch der Markierungsvorrichtung minimiert werden kann. Dieser Energieverbrauch setzt sich unter Anderem zusammen aus dem Energiebedarf des Empfängers für den Empfang der Signale des Navigationssystems, aus dem Energiebedarf der Schnittstelle für die bidirektionale Funkverbindung zum Gateway sowie aus dem Energiebedarf für die Datenverarbeitung innerhalb der Markierungsvorrichtung. Um die Energiereserven der Markierungsvorrichtung zu schonen, wird durch die vor der Übermittlung an die Markierungsvorrichtung stattfindende Vorverarbeitung der Daten der Energieverbrauch soweit wie möglich auf das Gateway und eventuell damit verbundene Server verlagert, die entweder mit Netzstrom oder zumindest mit einer externen Energiequelle verbunden sind oder von einer mobilen Arbeitsmaschine versorgt werden können.

Um nach dem Übergang in den aktiven Zustand erstmals mit Hilfe des Navigationssystems eine Position zu bestimmen, ist eine Suche nach Signalen der Satelliten in zwei Dimensionen hinsichtlich der Systemzeit, welche bei der Erzeugung des Signalmusters verwendet wird, und der Frequenzverschiebung aufgrund des Dopplereffekts erforderlich.

Zum einen senden alle Satelliten des Navigationssystems auf einer gemeinsamen Frequenz, so dass die Signale der Satelliten durch ein Code-Multiplexing (Code Division Multiple Access, CDMA) voneinander unterschieden werden. Jedes Signal ist für sich genommen ein Pseudozufallsrauschen, so dass sich alle Signale störungsfrei überlagern, jedoch ein jedes Signal durch Korrelation aus der Überlagerung aller Signale herausgefiltert werden kann. Um ein jedes Signal wiederzugewinnen, muss die zugrundeliegende Systemzeit während seiner Erzeugung bekannt sein. Dies schließt zumindest eine ungefähre Kenntnis der Systemzeit des Senders ein. Die Systemzeit ist somit ein Freiheitsgrad, der bei der Suche nach dem Signal zu ermitteln ist.

Der zweite Freiheitsgrad ist die Frequenz des Signals. Die Sender aller Satelliten arbeiten auf der gleichen Frequenz, aber die Signale sind jeweils in Abhängigkeit der Relativbewegung zwischen dem jeweiligen Sender und dem Empfänger am Boden Doppler-verschoben. Somit ist auch die tatsächliche Empfangsfrequenz ein Freiheitsgrad, welcher vom Empfänger ermittelt werden muss.

Indem nun in beiden Dimensionen der Suchraum jeweils deutlich eingeschränkt werden kann, wird insgesamt die erstmalige Bestimmung einer Position nach dem Übergang der Markierungsvorrichtung in den aktiven Zustand deutlich beschleunigt. Somit muss für eine Positionsbestimmung aus dem Ruhezustand heraus weniger Energie aufgewendet werden. Damit kann der Energieaufwand der Markierungsvorrichtung bei einem "Kaltstart" deutlich reduziert werden.

Im Hinblick auf eine Energie und Ressourcenschonende Positionsbestimmung ist insbesondere die Eingrenzung der Systemzeit des Signals vorteilhaft. Damit wird nicht nur das erstmalige Auffinden der Satellitensignale nach dem Übergang der Markierungsvorrichtung aus dem Ruhezustand in den aktiven Zustand erleichtert. Die Signallaufzeit, und damit verbunden die Systemzeit, ist auch bei der Auswertung der Position der Markierungsvorrichtung aus den empfangenen Signalen die primäre Größe. Somit wird auch diese Auswertung erleichtert, was zu einer weiteren Energieeinsparung führt.

Weiterhin ist die Systemzeit des Navigationssystems eine absolute Größe, die nicht auf eine bestimmte gemeinsame Zeitbasis von Gateway und Markierungsvorrichtung bezogen ist. Die diesbezügliche vom Gateway bezogene Information kann also von der Markierungsvorrichtung unmittelbar verwendet werden, auch wenn in der Markierungsvorrichtung unmittelbar nach dem Übergang in den aktiven Zustand noch keine genaue Uhrzeit oder Systemzeit zur Verfügung steht.

Schließlich sind sowohl die Doppler-Verschiebung als auch die Systemzeit Größen, die sich vergleichsweise langsam und stetig ändern. Änderungen können somit inkrementell an die Markierungsvorrichtung übermittelt werden, was sowohl das Datenvolumen auf der bidirektionalen Funkverbindung als auch die für die Übertragung und Verarbeitung benötigte Energie minimiert.

Die Vorverarbeitung der Daten auf dem Gateway oder damit verbundenen Servern reduziert auf Seiten der Markierungsvorrichtung nicht nur den Energiebedarf, sondern auch den dazugehörigen Hardwareaufwand für die Verarbeitung. Während es auf einer Baustelle meistens nur ein Gateway oder nur einige wenige Gateways gibt, ist in der Regel eine Vielzahl von Objekten mit Markierungsvorrichtungen auszustatten. Damit vervielfacht sich der Aufwand mit jeder Markierungsvorrichtung. Insbesondere benötigt die Markierungsvorrichtung nicht die Hardwareressourcen, um vollständige Almanach-Daten oder Ephemeriden-Daten speichern oder verarbeiten zu können.

Bei der Lokalisierung von Objekten auf Baustellen ist es in der Regel nicht erforderlich, Positionen in Echtzeit zu bestimmen und kontinuierlich zu verfolgen. Vielmehr entsteht der eingangs erläuterte Zeit- und Energieaufwand für das Suchen eines konkreten Objekts gerade dann, wenn die Markierungsvorrichtung aus dem Ruhezustand heraus eine erneute Positionsbestimmung vornehmen soll. Idealerweise sollte die Markierungsvorrichtung mit einer gegebenen Batteriekapazität möglichst lange betrieben werden können. Daher wird in einer besonders vorteilhaften Ausgestaltung der Erfindung die Markierungsvorrichtung beispielsweise zu festgelegten Zeitpunkten kurzzeitig aus dem Ruhezustand in einen aktiven Zustand versetzt, um ihre Position zu ermitteln. Die Übermittlung der Frequenzverschiebung und der Systemzeit ist mit diesem Zeitprogramm synchronisiert.

In einer weiteren besonders vorteilhaften Ausgestaltung der Erfindung empfängt die Markierungsvorrichtung den Frequenzbereich und den Systemzeitbereich nur dann, wenn sie mittels eines Beschleunigungssensors erkannt hat, dass sie bewegt wurde. Die Erkennung einer Bewegung kann also beispielsweise den Anlass für die Markierungsvorrichtung liefern, aktiv einen Frequenzbereich und Systemzeitbereich vom Gateway anzufordern. Es kann aber auch beispielsweise eine turnusmäßige Aktivierung der Markierungsvorrichtung aus dem Ruhezustand davon abhängig gemacht werden, dass eine Bewegung erkannt wurde. Wurde keine Bewegung erkannt, werden die Empfangsschaltkreise der Markierungsvorrichtung nicht zum geplanten Zeitpunkt aktiviert, und die Signale vom Gateway werden ignoriert. Auf diese Weise kann der Energiebedarf für die Empfangsschaltkreise entfallen, wenn es keinen Anlass gibt, eine veränderte Position neu zu bestimmen.

In einer besonders vorteilhaften Ausgestaltung der Erfindung übermittelt die Markierungsvorrichtung die ermittelte eigene Position über die bidirektionale Funkverbindung an das Gateway. Dann ist sie zum einen dort unmittelbar ablesbar und kann für die Suche nach dem Objekt verwendet werden. Zum anderen kann diese Position auch bei der nächsten Aktivierung der Markierungsvorrichtung aus dem Ruhezustand verwendet werden, um die Bestimmung der dann aktuellen Position zu beschleunigen. Vorteilhaft wird somit eine ermittelte Position der Markierungsvorrichtung, und/oder die Position des Gateways, zur Eingrenzung des Frequenzbereichs und des Systemzeitbereichs herangezogen.

Die Kombination aus eingegrenztem Frequenzbereich und eingegrenztem Bereich der Systemzeit ist bereits eine starke Verdichtung im Vergleich zu den ursprünglichen Almanach-Daten bzw. Ephemeriden-Daten. Eine weitere Verdichtung kann erzielt werden, indem nur Daten bezüglich derjenigen Satelliten übermittelt werden, die für die Positionsbestimmung am aussagekräftigsten sind. Die über die bidirektionale Funkverbindung übertragbare Datenmenge ist in der Regel dadurch limitiert, dass insbesondere für die Nutzung durch die Allgemeinheit per Allgemeinzuteilung freigegebene Frequenzen für Funkanwendungen kurzer Reichweite ("Short Range Devices", SRD) regulatorischen Beschränkungen hinsichtlich der belegten Bandbreite und/oder der zeitlichen Belegungsdauer durch eine Station (duty cycle) unterliegen. Weiterhin spart jede weitere Verdichtung auch Energie auf Seiten der Markierungsvorrichtung, da die Schnittstelle für die bidirektionale Funkverbindung nur für kürzere Zeit aktiv sein muss und auch weniger Datenverarbeitung innerhalb der Markierungsvorrichtung stattfinden muss.

Um eine solche weitere Verdichtung zu erreichen, kann beispielsweise für die Eingrenzung des Frequenzbereichs und des Systemzeitbereichs das Signal eines Satelliten ausgewählt werden, dessen voraussichtlicher Elevationswinkel am Ort der Markierungsvorrichtung einen vorgegebenen Schwellwert überschreitet. Dann ist sichergestellt, dass das Signal hinreichend lange und mit einer hinreichenden Qualität für eine Positionsbestimmung zu empfangen ist.

Alternativ oder auch in Kombination hierzu kann aus den vom Empfänger der Markierungsvorrichtung voraussichtlich zu empfangenden Satelliten diejenige Teilmenge ausgewählt werden, deren Konstellation in Bezug auf die Genauigkeit der Ermittlung der Position der Markierungsvorrichtung vorteilhaft ist. Der eingegrenzte Frequenzbereich und der eingegrenzte Systemzeitbereich beziehen sich dann auf ein von einem Satelliten aus dieser Teilmenge ausgesendetes Signal. Beispielsweise sind Konstellationen mit Satelliten vorteilhaft, deren Signale aus unterschiedlichen Himmelsrichtungen am Empfänger der Markierungsvorrichtung eintreffen. Ein Auswahlkriterium für eine vorteilhafte Konstellation kann beispielsweise der DOP-Wert ("Dilution of Precision") sein.

Durch die Auswahl derjenigen Satelliten, für die ein Frequenzbereich und ein Zeitbereich eingegrenzt werden, kann das Gateway die Markierungsvorrichtung insbesondere anweisen, nur auf den Empfang dieser Satelliten überhaupt Energie zu verwenden. Dementsprechend kann die Einschaltdauer des Empfängers der Markierungsvorrichtung nochmals verkürzt werden. Vorteilhaft empfängt die Markierungsvorrichtung daher nur Signale von Satelliten, zu denen sie vom Gateway einen eingegrenzten Frequenzbereich und einen eingegrenzten Bereich der Systemzeit erhalten hat.

In einer weiteren besonders vorteilhaften Ausgestaltung der Erfindung wird durch einen über ein Netzwerk mit dem Gateway verbundenen Aufbereitungsserver eine Auswahl von Almanach-Daten, und/oder eine Auswahl von Ephemeriden-Daten, die sich auf vom Empfänger der Markierungsvorrichtung voraussichtlich sichtbaren Satelliten bezieht, erstellt und über das Netzwerk an das Gateway übermittelt. Der Aufbereitungsserver kann beispielsweise ein Cloud-Server sein, der Almanach-Daten, und/oder Ephemeriden-Daten, von einer externen Datenquelle bezieht. Durch die Vorauswahl der Daten bereits auf dem Aufbereitungsserver kann insbesondere bereits auf der Netzwerkverbindung zur Baustelle eine Verdichtung der zu übertragenden Datenmenge stattfinden. Gerade Baustellen sind häufig noch nicht mit einer verkabelten Netzanbindung erschlossen, sondern müssen stattdessen provisorisch über Mobilfunk versorgt werden, wobei das zu übertragende Datenvolumen begrenzt und/oder mit Kosten verbunden ist.

In einer weiteren besonders vorteilhaften Ausgestaltung der Erfindung werden der Frequenzbereich und der Systemzeitbereich durch einen über ein Netzwerk mit dem Gateway verbundenen Aufbereitungsserver eingegrenzt und über das Netzwerk an das Gateway übermittelt. Dann wird zum einen die zur Baustelle zu übertragende Datenmenge maximal verdichtet, und zum anderen wird auch der Energieverbrauch des Gateways minimiert. Das Gateway kann dann also beispielsweise, wie auch die Markierungsvorrichtung, aus einer Batterie versorgt werden.

In einer weiteren besonders vorteilhaften Ausgestaltung der Erfindung wird in der Markierungsvorrichtung zur Ermittlung der Systemzeit des Signals mindestens eines Satelliten mindestens eine Replik des Signals aus einer für den Satelliten spezifischen Kennung und einem Schätzwert für die Systemzeit des Signals angefertigt. Die Laufzeit wird aus der Korrelation der Replik mit dem Signal ausgewertet. Diese Art der Auswertung ist besonders energieeffizient, da das Signal in der Markierungsvorrichtung nicht demoduliert werden muss. Weiterhin erfordert diese Auswertung eine deutlich geringere Signalstärke als eine vollständige Demodulation. Gerade auf Baustellen kann es zu Abschattungen und Dämpfungen der Satellitensignale kommen, beispielsweise, wenn Objekte und die zugehörigen Markierungsvorrichtungen sich am Rande oder gar innerhalb von Gebäuden befinden. Die Arbeitsteilung, dass die Markierungsvorrichtung nur eine minimale und dafür sehr robuste Auswertung der Signale vornimmt, während das Gateway die Detailinformationen über die Konstellation der Satelliten heranschafft, macht die Positionsbestimmung also insgesamt zuverlässiger.

Die bidirektionale Funkverbindung kann beispielsweise so ausgestaltet sein, dass die Markierungsvorrichtung auf der Sendefrequenz des Gateways empfängt und das Gateway auf der Sendefrequenz der Markierungsvorrichtung empfängt. Beispielsweise kann das Gateway ein Knoten in einem Netz nach dem LoRa®-Standard für die Kommunikation im "Internet of Things", loT, sein, und die Markierungsvorrichtungen können an diesen Knoten angebunden sein. Die Knoten können untereinander vernetzt sein. Einer oder mehrere der Knoten in einem LoRa®-Netz können auch eine Verbindung zum Internet bereitstellen.

Nach dem zuvor Beschriebenen ist besonders vorteilhaft die Markierungsvorrichtung mit einem Gegenstand verbunden, dessen Position innerhalb einer Baustelle gesucht wird.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel des Verfahrens 100;
- Figur 2: Detaildarstellung der Auswertung der Position 10 in Schritt 140 des Verfahrens 100 mit den Teilschritten 142 und 144;
- Figur 3: Übersichtsdarstellung der bei der beispielhaften Anwendung des Verfahrens 100 auf einer Baustelle 200 zusammenwirkenden Geräte und zugehörigen Signalflüsse.

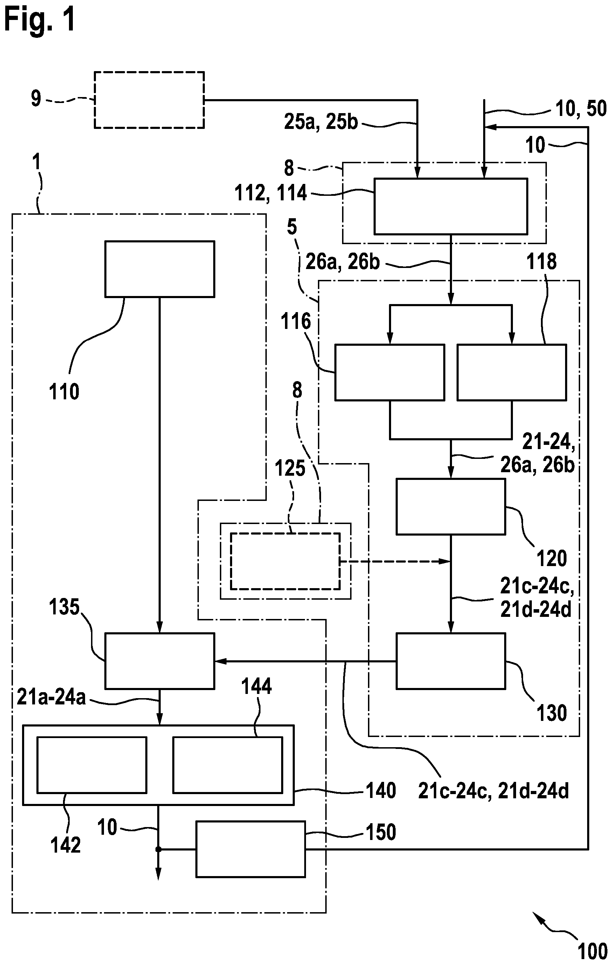

Nach Figur 1 bezieht ein Aufbereitungsserver 8 von einer externen Datenquelle 9 Almanach-Daten 25a und Ephemeriden-Daten 25b. In Schritt 112 wird an Hand der letzten ermittelten Position 10 der Markierungsvorrichtung 1, und/oder an Hand der Position 50 des Gateways 5, ermittelt, welche Satelliten 21-24 voraussichtlich vom Empfänger 11 der Markierungsvorrichtung 1 sichtbar bzw. zu empfangen sind. Es wird eine dementsprechende Auswahl 26a der Almanach-Daten 25a, sowie eine Auswahl 26b der Ephemeriden-Daten 25b, getroffen. Insoweit ist in dem Schritt 112 auch die Berücksichtigung 114 der Position 10 der Markierungsvorrichtung 1, bzw. der Position 50 des Gateways 5, einbezogen.

Die Auswahl wird in den Schritten 116 und/oder 118 weiter verfeinert. Gemäß Schritt 116 werden Satelliten 21-24 mit einer zu erwartenden Mindest-Elevation am Ort 10 der Markierungsvorrichtung 1 ausgewählt. Gemäß Schritt 118 werden Satelliten 21-24 ausgewählt, die eine der Genauigkeit der Positionsbestimmung besonders förderliche Konstellation bilden. Dem Schritt 120 werden also nur die zu diesen Satelliten 21-24 gehörigen Daten 26a, 26b zugeführt.

In Schritt 120 werden Bereiche für die Systemzeit 21c-24c ermittelt, innerhalb derer die Laufzeiten 21b-24b der Signale 21a-24a zu suchen sind. Weiterhin werden auch Frequenzbereiche 21d-24d ermittelt, innerhalb derer die Frequenzen der Signale 21a-24a zu suchen sind. In dem in Figur 1 gezeigten Ausführungsbeispiel wird diese Eingrenzung 120 vom Gateway 5 vorgenommen. Optional kann die Eingrenzung auch gemäß Schritt 125 noch auf dem Aufbereitungsserver 8 vorgenommen werden. In Schritt 130 werden die Systemzeitbereiche 21c-24c sowie die Frequenzbereiche 21d-24d an die Markierungsvorrichtung 1 übermittelt.

Die Markierungsvorrichtung 1 ist in Schritt 110 vom Ruhezustand in den aktiven Zustand versetzt worden, um ihre Position 10 zu bestimmen. Gemäß Schritt 135 empfängt die Markierungsvorrichtung 1 von vornherein nur Signale 21a-24a, für die sie vom Gateway 5 zugehörige Systemzeitbereiche 21c-24c sowie zugehörige Frequenzbereiche 21d-24d erhalten hat. Die Systemzeitbereiche 21c-24c sowie die Frequenzbereiche 21d-24d ermöglichen es hierbei insbesondere, die Signale 21a-24a möglichst schnell aufzufinden.

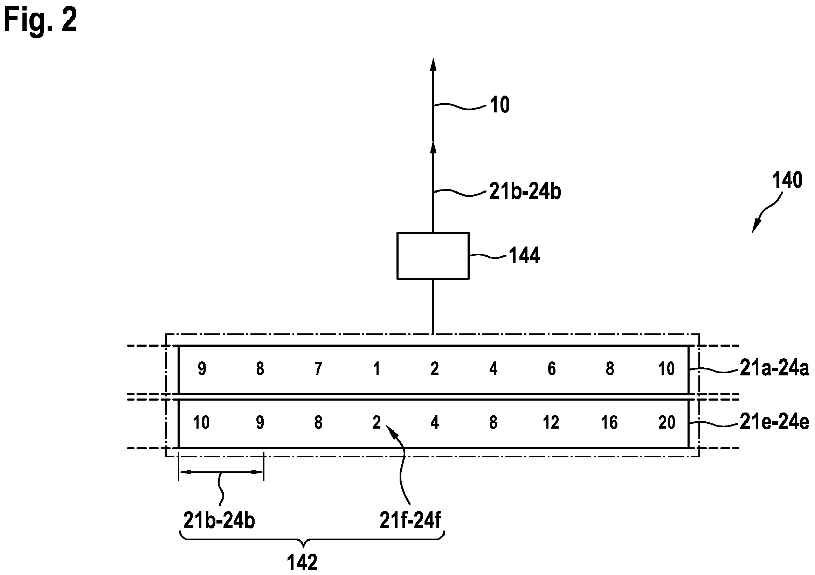

In Schritt 140 werden die Signale 21a-24a in der Zusammenschau ausgewertet, und es wird die Position 10 der Markierungsvorrichtung 1 ermittelt. Es ist in Figur 1 lediglich angedeutet, dass dies die Teilschritte 142 und 144 umfasst, die in Figur 2 näher erläutert sind. In Schritt 150 wird die ermittelte Position 10 der Markierungsvorrichtung 1 an das Gateway 5 zurückgespielt, um bei der nächsten Aktivierung 110 der Markierungsvorrichtung 1 erneut eine schnelle Positionsbestimmung zu ermöglichen.

Figur 2 verdeutlicht die Auswertung der Position 10 der Markierungsvorrichtung 1 in Schritt 140. Jedes empfangene Signal 21a-24a ist eine pseudozufällige Zahlenfolge, die aus einer für den jeweiligen Satelliten 21-24 spezifischen Kennung und der Systemzeit generiert wurde. In Teilschritt 142 wird aus dieser Kennung 21f-24f sowie einem Schätzwert für die Systemzeit, eine Replik 21e-24e des Signals 21a-24a angefertigt, wobei die Kennung 21f-24f und die Systemzeit den wesentlichen Inhalt der Replik 21e-24e bestimmen und der Schätzwert für die Laufzeit 21b-24b den zeitlichen Versatz gegenüber dem empfangenen Signal 21a-24a bestimmt. Dementsprechend wird in Teilschritt 144 aus dem Maximum der Korrelation zwischen dem Signal 21a-24a und der Replik 21e-24e die Laufzeit 21b-24b des Signals 21a-24a ermittelt. Aus den Laufzeiten 21b-24b aller Signale 21a-24a ergibt sich die gesuchte Position 10 der Markierungsvorrichtung 1.

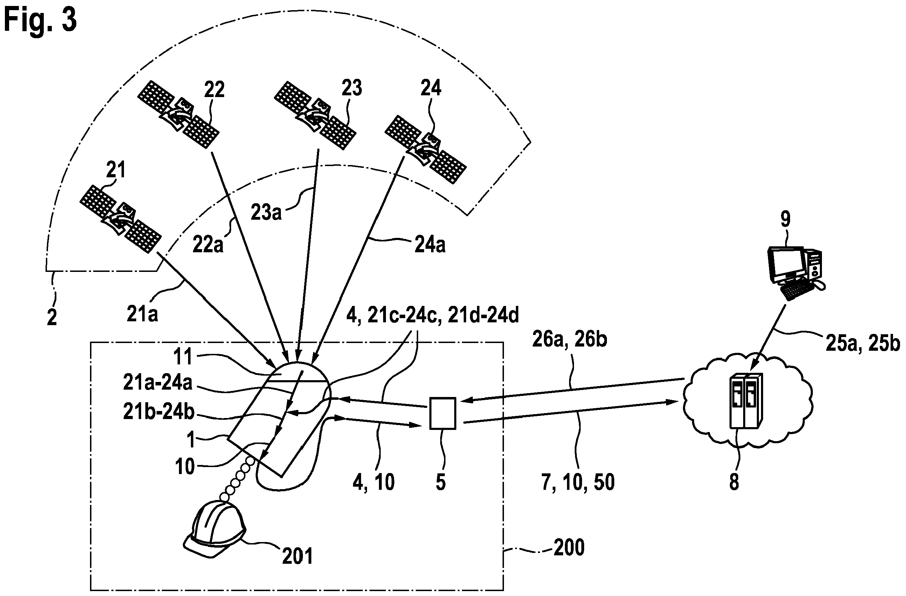

Figur 3 zeigt die beispielhafte Anwendung des Verfahrens 100 auf einer Baustelle 200, auf der ein Objekt 201 zu lokalisieren ist. Das Objekt 201 ist mit der Markierungseinrichtung 1 verbunden. Die Markierungsvorrichtung 1 weist einen Empfänger für die Signale 21a-24a der zum Navigationssystem 2 gehörigen Satelliten 21-24 auf. Wie bereits in Figur 1 erläutert, erleichtern die vom Gateway 5 an die Markierungsvorrichtung 1 übermittelte Systemzeit 21c-24c und Frequenzbereiche 21d-24d das Auffinden der Signale 21a-24a und damit auch die Bestimmung ihrer Laufzeiten 21b-24b. Aus den Laufzeiten 21b-24b der Signale 21a-24a wird die Position 10 der Markierungsvorrichtung 1 ermittelt und über die bidirektionale Funkverbindung 4 an das Gateway 5 zurückgespielt. Das Gateway 5 ist seinerseits über ein Netzwerk 7 mit dem außerhalb der Baustelle 200 in der Cloud ansässigen Aufbereitungsserver 8 verbunden.

## Patentansprüche

1. Verfahren (1) zur Ermittlung der Position (10) mindestens einer Markierungsvorrichtung (1), wobei die Markierungsvorrichtung (1) einen Empfänger (11) für ein satellitengestütztes Navigationssystem (2) aufweist und dazu ausgebildet ist, ihre Position (10) anhand der von einer Mehrzahl von Satelliten (21-24) des Navigationssystems (2) ausgesendeten Signale (21a-24a) zu ermitteln (140), wobei die Markierungsvorrichtung (1) über eine bidirektionale Funkverbindung (4) an ein Gateway (5) gekoppelt ist, **dadurch gekennzeichnet, dass** aus Almanach-Daten (25a), und/oder aus Ephemeriden-Daten (25b), des Navigationssystems (2) mindestens ein Frequenzbereich (21d-24d), in den ein von einem Satelliten (21-24) ausgesendetes Signal (21a-24a) Doppler-verschoben ist, ermittelt sowie mindestens ein Systemzeitbereich (21c-24c) für die Ermittlung der Laufzeit (21b-24b) des Signals (21a-24a), eingegrenzt (120) und über die bidirektionale Funkverbindung (4) vom Gateway (5) zur Markierungsvorrichtung (1) übermittelt (130) wird.

2. Verfahren (100) nach Anspruch 1, **dadurch gekennzeichnet, dass** die Markierungsvorrichtung (1) nach einem Zeitprogramm kurzzeitig von einem Ruhezustand in einen aktiven Zustand versetzt wird (110), um ihre Position (10) zu ermitteln (140), wobei die Übermittlung (130) des Frequenzbereichs (21d-24d) und des Systemzeitbereichs (21c-24c) mit diesem Zeitprogramm synchronisiert ist.

3. Verfahren (100) nach einem der Ansprüche 1 bis 2, **dadurch gekennzeichnet, dass** die Markierungsvorrichtung (1) den Frequenzbereich (21d-24d) und den Systemzeitbereich (21c-24c) nur dann empfängt, wenn sie mittels eines Beschleunigungssensors erkannt hat, dass sie bewegt wurde.

4. Verfahren (100) nach einem der Ansprüche 1 bis 3, **dadurch gekennzeichnet, dass** die Markierungsvorrichtung (1) die ermittelte eigene Position (10) über die bidirektionale Funkverbindung (4) an das Gateway (5) übermittelt (150).

5. Verfahren (100) nach einem der Ansprüche 1 bis 4, **dadurch gekennzeichnet, dass** eine ermittelte Position (10) der Markierungsvorrichtung (1), und/oder die Position (50) des Gateways (5), zur Eingrenzung (120) des Frequenzbereichs (21d-24d) und des Systemzeitbereichs (21c-24c) herangezogen wird (114).

6. Verfahren (100) nach einem der Ansprüche 1 bis 5, **dadurch gekennzeichnet, dass** für die Eingrenzung (120) des Frequenzbereichs (21d-24d) und des Systemzeitbereichs (21c-24c) das Signal (21a-24a) eines Satelliten (21-24) ausgewählt wird (116), dessen voraussichtlicher Elevationswinkel am Ort (10) der Markierungsvorrichtung (1) einen vorgegebenen Schwellwert überschreitet.

7. Verfahren (100) nach einem der Ansprüche 1 bis 6, **dadurch gekennzeichnet, dass** aus den vom Empfänger (11) der Markierungsvorrichtung (1) voraussichtlich zu empfangenden Satelliten (21-24) eine Teilmenge ausgewählt wird (118), deren Konstellation in Bezug auf die Genauigkeit der Ermittlung der Position (10) der Markierungsvorrichtung (1) vorteilhaft ist, wobei sich der eingegrenzte Frequenzbereich (21d-24d) und der eingegrenzte Systemzeitbereich (21c-24c) auf ein von einem Satelliten (21-24) aus dieser Teilmenge ausgesendetes Signal (21a-24a) beziehen.

8. Verfahren (100) nach einem der Ansprüche 1 bis 7, **dadurch gekennzeichnet, dass** die Markierungsvorrichtung (1) nur Signale (21a-24a) von Satelliten (21-24) empfängt (135), zu denen sie vom Gateway (5) einen eingegrenzten Frequenzbereich (21d-24d) und einen eingegrenzten Systemzeitbereich (21c-24c) erhalten hat.

9. Verfahren (100) nach einem der Ansprüche 1 bis 8, **dadurch gekennzeichnet, dass** durch einen über ein Netzwerk (7) mit dem Gateway (5) verbundenen Aufbereitungsserver (8) eine Auswahl (26a) von Almanach-Daten (25a), und/oder eine Auswahl (26b) von Ephemeriden-Daten (25b), die sich auf vom Empfänger (11) der Markierungsvorrichtung (1) voraussichtlich sichtbare Satelliten (21-24) bezieht, erstellt und über das Netzwerk (7) an das Gateway (5) übermittelt wird (112).

10. Verfahren (100) nach einem der Ansprüche 1 bis 9, **dadurch gekennzeichnet, dass** der Frequenzbereich (21d-24d) und der Systemzeitbereich (21c-24c) durch einen über ein Netzwerk (7) mit dem Gateway (5) verbundenen Aufbereitungsserver (8) eingegrenzt (120) und über das Netzwerk (7) an das Gateway (5) übermittelt (125) werden.

11. Verfahren (100) nach einem der Ansprüche 1 bis 10, **dadurch gekennzeichnet, dass** in der bidirektionalen Funkverbindung (4) die Markierungsvorrichtung (1) auf der Sendefrequenz des Gateways (5) empfängt und das Gateway (5) auf der Sendefrequenz der Markierungsvorrichtung (1) empfängt.

12. Verfahren (100) nach einem der Ansprüche 1 bis 11, **dadurch gekennzeichnet, dass** die Markierungsvorrichtung (1) mit einem Gegenstand (201) verbunden ist, dessen Position innerhalb einer Baustelle (200) gesucht wird.
